# EUROPÄISCHE PATENTSCHRIFT

(11) **EP 1 400 333 B1**
(45) Veröffentlichungstag und Bekanntmachung des Hinweises auf die Patenterteilung: **30.11.2005**
(21) Anmeldenummer: 03020415.0
(22) Anmeldetag: 10.09.2003
(51) Int. Cl.: B29C 45/42, B29C 45/17

(54) **Verfahren zum Entnehmen von Spritzgussteilen aus einer Spritzgiessmaschine sowie Spritzgiessmaschine mit Handlingsystem**
Process of removing injection moulded parts from an in injection moulding machine and injection mouding machine equipped with a handling system
Procédé de prélèvement des pièces moulées par injection d'une presse à injecter et presse à injecter équipée avec un système de manipulation

(30) Priorität: 17.09.2002 DE 10243130
(43) Veröffentlichungstag der Anmeldung: 24.03.2004
(73) Patentinhaber: HEKUMA GmbH, 85386 Eching (DE)
(72) Erfinder: Knoepfler, Kurt G., Hekuma GmbH, 85386 Eching (DE)
(74) Vertreter: Klingseisen, Franz

(56) Entgegenhaltungen:
- EP-A- 0 358 104
- EP-A- 1 092 524
- EP-A- 1 174 242
- US-A1- 2002 071 882
- JOHANNSON B: "IM DOPPLEPACK AUF RATIONALISIERUNGSKURS" KUNSTSTOFFBERATER, KUNSTSTOFF VERLAG. ISERNHAGEN, DE, Bd. 42, Nr. 4, 1. April 1997 (1997-04-01), Seiten 12-15, XP000687608 ISSN: 0172-6374

## Beschreibung

Die Erfindung betrifft ein Verfahren zum Entnehmen von Spritzgussteilen aus einer Kunststoff-Spritzgießmaschine sowie eine Spritzgießmaschine mit Handlingsystem nach dem Oberbegriff der Ansprüche 3 und 4.

DE 38 30 210 A1 beschreibt eine Entnahmevorrichtung für Spritzgussteile aus einer dreiteiligen Etagenform einer Spritzgießmaschine, wobei zwei getrennte Entnahmewerkzeuge in die beiden Trennebenen der Etagenform einfahrbar sind. Mittels Ketten- oder Zahnriementrieben ist eine Bewegungskopplung zwischen der äußeren bewegbaren Formträgerplatte und den Entnahmewerkzeugen vorgesehen.

Aus EP 1 092 524 A1 ist ein Handlingsystem für eine Kunststoff-Spritzgießmaschine bekannt, bei dem ein Arm einer Entnahmevorrichtung zwischen die geöffneten Formhälften der Spritzgießmaschine eingefahren wird, um die Spritzgußteile zu entnehmen, worauf diese zu einer Umsetzeinrichtung überführt werden, welche die Spritzgussteile von dem Arm der Entnahmevorrichtung übernimmt und auf einem Förderband ablegt.

US-A-2002/0071882 beschreibt eine Pressformvorrichtung mit übereinanderliegend angeordneten Paaren von Formhälften, wobei die jeweils untere Formhälfte durch eine Einrichtung seitlich aus dem Stapel ausfahrbar ist, wenn sich die Formhälften in der offenen Stellung befinden. Durch eine Handlingeinrichtung können Formteile aus den seitlich ausgefahrenen Formhälften entnommen werden oder es können zu formende Teile in die seitlich ausgefahrenen Formhälften durch die Handlingeinrichtung eingesetzt werden, wobei die Handlingeinrichtung Arme entsprechend der Anzahl der Trennebenen zwischen den einzelnen Formhälften aufweist und mittels der Arme die Formteile entnommen bzw. zu formende Teile in die Formhälften eingesetzt werden.

Der Erfindung liegt die Aufgabe zugrunde, ein Verfahren und eine Vorrichtung der eingangs angegebenen Art so auszubilden, dass eine Erhöhung der Kapazität bei der Herstellung von Spritzgussteilen erreicht wird.

Diese Aufgabe wird bei einem Verfahren mit den Merkmalen der Ansprüche 1 und 2 gelöst. Durch das Bereitstellen einer Spritzgießmaschine mit mehr als zwei Trennebenen eines Etagenwerkzeugs kann in einem Spritzgießvorgang eine große Anzahl von Spritzgussteilen gleichzeitig hergestellt werden, wobei durch die Übergabe der gleichzeitig aus allen Trennebenen entnommenen Spritzgussteile an wenigstens zwei versetzt zueinander angeordneten oder in eine versetzte Position verfahrbaren Umsetzeinheiten auch die Ablage der entnommenen größeren Anzahl von Spritzgussteilen schnell und ohne größeren Platzbedarf erfolgen kann.

Hinsichtlich der Vorrichtung wird die zuvor angegebene Aufgabe durch die Mermale der Ansprüche 3 und 4 gelöst. Es wird eine Spritzgießmaschine mit mehr als zwei Trennebenen eines Etagenwerkzeugs in Verbindung mit einem Handlingsystem vorgesehen, dessen Entnahmevorrichtung Arme aufweist, deren Anzahl der Anzahl der Trennebenen entspricht, wobei zueinander versetzt angeordnete oder verfahrbare Umsetzeinheiten mit jeweils zwei Umsetzarmen oder -platten vorgesehen sind, die jeweils von zwei Armen der Entnahmevorrichtung die Spritzgussteile übernehmen und auf zugeordneten Förderbahnen ablegen. Dadurch, dass die Entnahmevorrichtung nacheinander in zwei Transferstationen bewegt wird, können an jeder Transferstation zwei Umsetzplatten zum Ablegen der Spritzgussteile auf der Förderbahn so verschwenkt werden, dass sie sich gegenseitig nicht behindern. Hierdurch wird eine insgesamt kompakte Ausgestaltung des Handlingsystems erreicht und der Handlingablauf innerhalb einer sehr kurzen Zykluszeit ermöglicht, wobei zusätzliche Umsetzstationen eingespart werden.

Die Erfindung wird beispielsweise anhand der Zeichnung näher erläutert. Es zeigen:
- Fig. 1: in einer Draufsicht schematisch eine Spritzgießmaschine mit vier Trennebenen des Etagewerkzeugs sowie schematisch ein Handlingsystem,
- Fig. 1a: schematisch die Stationen der Entnahmevorrichtung,
- Fig. 2: eine Seitenansicht des Handlingsystems von Fig. 1 mit Spritzgießmaschine,
- Fig. 3: in einer Seitenansicht schematisch den Schwenkvorgang zweier Umsetzplatten einer Umsetzeinheit,
- Fig 4+5: Varianten von Umsetzeinheiten, und
- Fig. 6: in einer Draufsicht eine praktische Ausführungsform eines Handlingssystems an einer Spritzgießmaschine entsprechend Fig. 1.

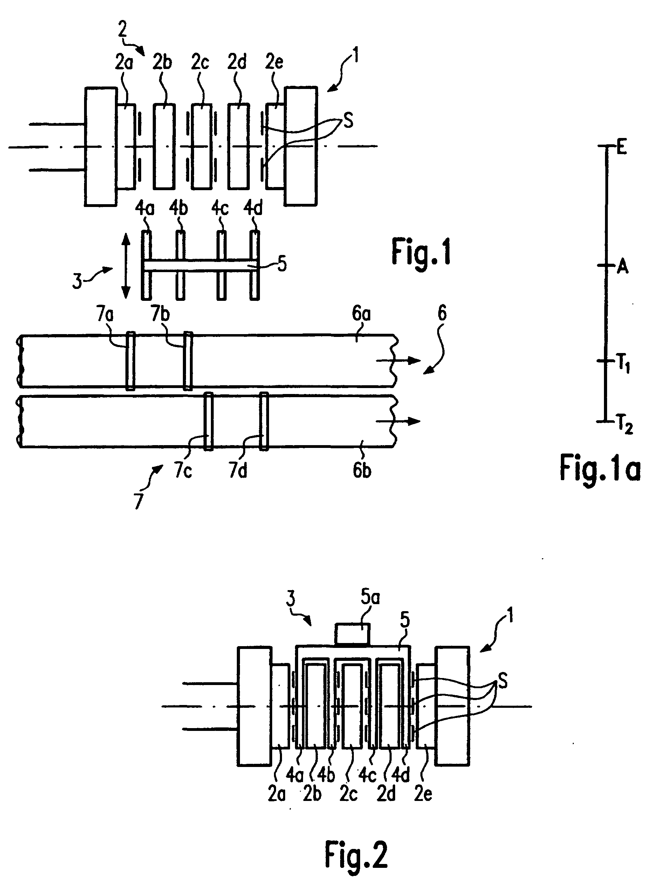

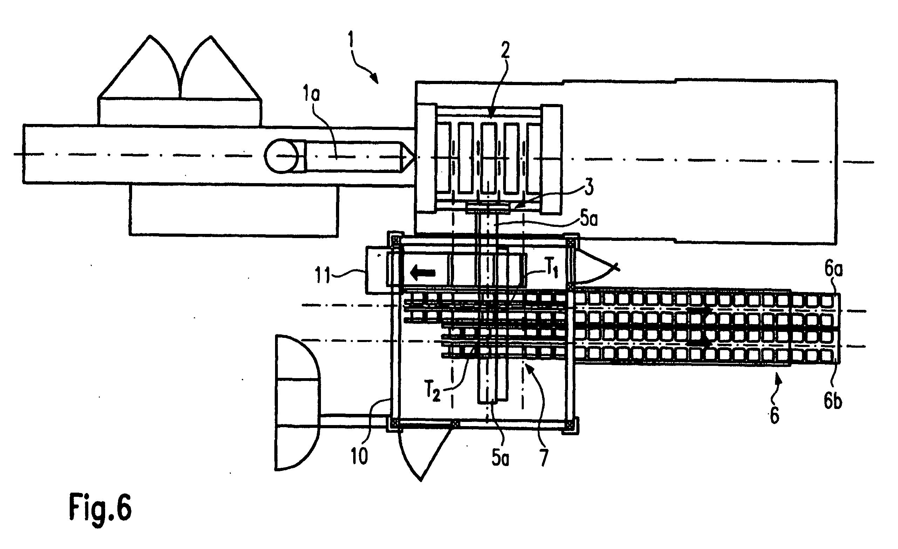

In Fig. 1 ist allgemein mit 1 eine Spritzgießmaschine bezeichnet, die bei dem dargestellten Ausführungsbeispiel ein Etagenwerkzeug 2 mit vier Trennebenen aufweist, die zwischen den Seiten von fünf Formhälften 2a bis 2e liegen. Auf jeder Formhälfte sind Formhohlräume für mehrere Spritzgußteile ausgebildet, beispielsweise sechs Formhohlräume bei dem dargestellten Ausführungsbeispiel. Durch die in Fig. 6 schematisch angedeutete Spritzgießeinrichtung 1a wird durch die einzelnen Elemente des geschlossenen Etagenwerkzeugs 2 Kunststoff in die Formhohlräume in den vier Trennebenen eingespritzt, worauf die Formhälften auseinandergefahren werden, so daß die vier Trennebenen zwischen den jeweiligen Formhälften für die Entnahme der Spritzgussteile offen sind, wie dies in Fig. 1, 2 und 6 dargestellt ist. Die durch einen Strich angedeuteten Spritzgußteile S befinden sich bei dem dargestellten Ausfilhrungsbeispiel auf den Seiten der Formhälften 2a, 2c und 2e, wobei die Spritzgußteile an der mittleren Formhälfte 2c auf beiden Seiten positioniert sind.

Mit 3 ist eine Entnahmevorrichtung bezeichnet, die neben der Spritzgießmaschine angeordnet ist und entsprechend der Anzahl der Trennebenen vier Arme 4a bis 4d aufweist, die auf einem gemeinsamen Träger 5 angeordnet sind, der auf einer quer zur Längsachse der Spritzgießmaschine liegenden Führung 5a (Fig. 6) verfahrbar ist und von dem die Arme 4a bis 4d nach Art eines Kammes nach unten ragen, wie Fig. 2 zeigt. In Fig. 1 ist die Entnahmevorrichtung 3 in einer Ausgangsposition A (Fig. 1a) neben der Spritzgießmaschine 1 wiedergegeben, die sie während des Spritzvorgangs bei geschlossenem Etagenwerkzeug 2 einnimmt. Sobald das Etagenwerkzeug 2 geöffnet wird, wird der Träger 5 mit den Armen 4a bis 4d in eine Entnahmestellung E (Fig. 1a) in horizontaler Richtung zwischen die geöffneten Formhälften gefahren, worauf durch an sich bekannte Greifer an den Armen die Spritzgußteile S aus den Formhohlräumen entnommen und auf den Armen 4a bis 4d festgehalten werden.

Die Entnahmevorrichtung 3 wird hierauf aus der Entnahmestellung E in eine erste Transferstation T₁ (Fig. 1a) über einer Förderbahn 6a zurückbewegt, über der bei dem dargestellten Ausführungsbeispiel zwei Umsetzplatten 7a und 7b einer Übergabeeinrichtung 7 angeordnet sind, die mit den zugeordneten Armen 4a und 4b der Entnahmevorrichtung 3 derart zusammenwirken, dass die auf den Armen 4a und 4b gehaltenen Spritzgussteile S von den Umsetzplatten 7a und 7b übernommen werden. Unmittelbar darauf wird die Entnahmevorrichtung 3 in eine zweite Transferstation T₂ über einer Förderbahn 6b verfahren, über der ebenfalls zwei Umsetzplatten 7c und 7d angeordnet sind, die mit den Armen 4c und 4d der Entnahmevorrichtung zusammenwirken und die Spritzgussteile S von diesen Armen übernehmen.

Aus der zweiten Transferposition T₂ kann die Entnahmevorrichtung 3 wieder in die in Fig. 1 wiedergegebene Ausgangsposition A zurückgefahren oder - wenn inzwischen bereits ein Spritzgießvorgang beendet ist - direkt in die Entnahmestellung E zwischen den geöffneten Formhälften eingefahren werden, um erneut einen Satz von Spritzgussteilen S aus dem Etagenwerkzeug 2 zu entnehmen.

Da an der Umsetzeinrichtung 7 eine Schwenkbewegung der Umsetzplatten aus der vertikalen Übernahmestellung in eine horizontale Umsetzstellung ausgeführt werden muß, ist die Umsetzeinrichtung in wenigstens zwei Einheiten unterteilt, die versetzt nebeneinander angeordnet sind und jeweils zwei Umsetzarme oder Umsetzplatten aufweisen, die eine Schwenkbewegung von etwa 90° so ausführen, dass sie sich gegenseitig nicht behindern.

Bei relativ eng nebeneinanderliegenden Trennebenen des Etagenwerkzeugs weisen die Umsetzeinheiten maximal zwei Umsetzplatten auf, weil bei enger Positionierung der Umsetzplatten nur zwei Umsetzplatten so verschwenkt bzw. gekippt werden können, dass sie sich gegenseitig nicht behindern. Die Umsetzplatten selbst können einzelne Arme aufweisen, die auf einem gemeinsamen Träger angeordnet sind, so dass diese Arme gemeinsam nach Art einer Platte verschwenkt bzw. gekippt werden.

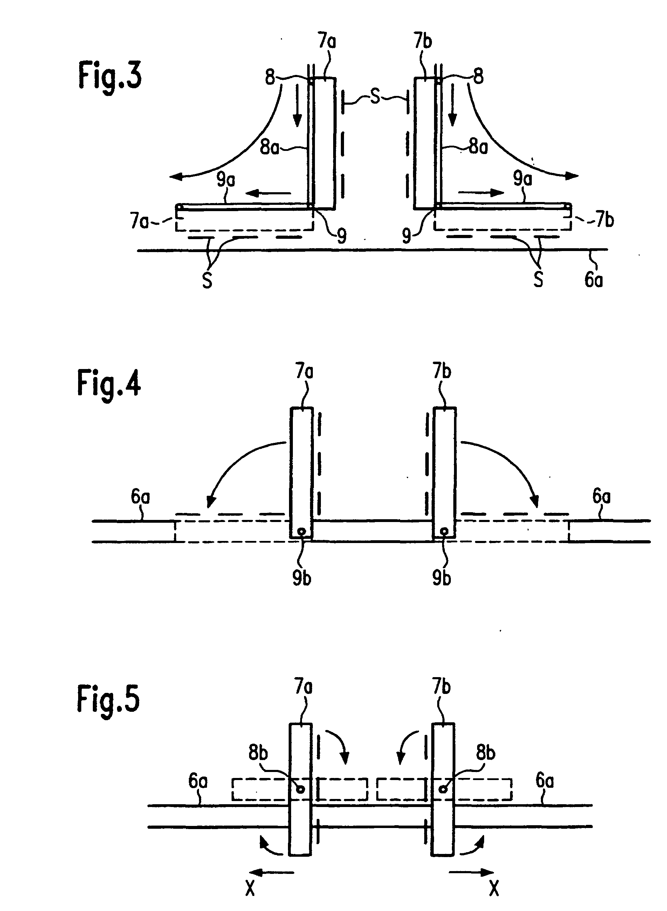

Fig. 3 zeigt ein Ausführungsbeispiel von verschwenkbaren Umsetzplatten 7a und 7b über der Förderbahn 6a in einer Seitenansicht. Die einzelnen Umsetzplatten sind jeweils am oberen und unteren Rand bei 8 und 9 verschwenkbar in einer Führung 8a bzw. 9a gelagert. Durch eine nicht dargestellte Betägigungseinrichtung kann die untere Anlenkstelle 9 längs der horizontalen Führung 9a verschoben werden, wobei gleichzeitig die obere Anlenkstelle 8 in der vertikalen Führung 8a nach unten bewegt wird, so dass die Umsetzplatte durch eine Schwenkbewegung längs des gebogenen Pfeils in eine horizontale Umsetzstellung überführt wird, die in Fig. 3 durch gestrichelte Linien dargestellt ist. In dieser horizontalen Umsetzstellung können die einzelnen Spritzgussteile S auf der zugeordneten Förderbahn, beispielsweise einem Förderband, abgelegt werden. EP 1 092 524 A1 beschreibt im Einzelnen die Ausgestaltung einer derartigen verschwenkbaren Umsetzplatte.

Es kann aber auch eine andere Ausgestaltung vorgesehen werden, bei der beispielsweise die beiden Umsetzplatten durch eine Betätigungseinrichtung lediglich so gekippt werden, dass sie sich gegenseitig nicht behindern, wie dies Fig. 4 schematisch zeigt, wobei die um eine Anlenkstelle 9b verschwenkbaren Umsetzarme 7a, 7b durch die Fördereinrichtung tauchen.

Bei der Ausgestaltung nach Fig. 4 können die Umsetzplatten 7a und 7b auch um eine vertikale Achse um 180° gedreht werden, so dass die Spritzgussteile S an den aufrecht stehenden Umsetzplatten außen liegen, bevor eine Kippbewegung in die Ebene der Förderbahn erfolgt.

Fig. 5 zeigt eine weitere Ausführungsvariante, bei der die Umsetzplatten um einen mittigen Drehpunkt 8b geschwenkt werden. Hierbei können die Umsetzplatten 7a, 7b neben der zugeordneten Förderbahn verschwenkt und dann in der horizontalen Stellung über die Förderbahn verfahren werden, wobei die Umsetzplatten auch in Richtung der Pfeile X auseinander bewegt werden können. Nach einer weiteren Abwandlung werden die Umsetzplatten oder -arme 7a, 7b in Fig. 5 in Gegenrichtung gedreht, wobei sie durch die Fördereinrichtung tauchen.

Dadurch, dass die Umsetzeinrichtung 7 bei dem Ausführungsbeispiel mit vier Trennebenen in zwei Einheiten unterteilt ist, von denen jede zwei Umsetzplatten aufweist, können die Umsetzplatten der gesamten Umsetzeinrichtung verschwenkt werden, ohne dass sie sich gegenseitig behindern. Dabei können die Umsetzplatten 7a und 7b der ersten Umsetzeinheit ihre Schwenkbewegung schon beginnen, während die Entnahmevorrichtung 3 in die zweite Transferstation T₂ bewegt wird, in der die Spritzgussteile an den Armen 4c und 4d an die Umsetzplatten 7c und 7d übergeben werden. Die Führung 5a des Trägers 5 der Entnahmevorrichtung 3 ist über dem Etagenwerkzeug 2 und über der Umsetzeinrichtung 7 angeordnet, wie dies Fig. 2 zeigt, so dass die sich überlappenden Bewegungsabläufe zwischen Verstellbewegung der Entnahmevorrichtung 3 quer zur Längsachse der Spritzgießmaschine sowie quer zu den Förderbahnen 6a, 6b und Schwenkbewegung der Umsetzplatten nicht behindert werden.

Bei einer Spritzgießmaschine mit drei Trennebenen zwischen den Formhälften wird eine Entnahmevorrichtung 3 mit drei Armen vorgesehen, die mit beispielsweise zwei Umsetzplatten 7a und 7b an der ersten Förderbahn 6a zusammenwirken, während der dritte Arm der Entnahmevorrichtung die Spritzgussteile an eine einzelne Umsetzplatte an der zweiten Förderbahn 6b übergibt. Bei einer solchen Ausgestaltung kann die Entnahmevorrichtung 3 in der ersten Transferstation T₁ auch nur mit einer Umsetzplatte und in der zweiten Transferstation T₂ mit zwei Umsetzplatten zusammenwirken.

In entsprechender Weise wird bei mehr als vier Trennebenen des Etagenwerkzeugs 2 eine dritte Transferstation über einer dritten Förderbahn vorgesehen, an der eine oder zwei Umsetzerplatten einer Umsetzeinheit positioniert sind.

Fig. 1 zeigt schematisch zwei voneinander getrennte Förderbahnen 6a und 6b. In der Praxis kann hierfür ein einzelnes Förderband vorgesehen werden, auf dem in nebeneinander liegenden Reihen die Spritzgussteile abgelegt werden.

Bei der beschriebenen Ausführungsform ist die Umsetzeinrichtung in zwei hinsichtlich ihrer Positionierung stationäre Einheiten unterteilt. Es ist aber auch möglich, die Umsetzeinrichtung verfahrbar auszubilden, wobei die Umsetzplatten bzw. -arme 7a bis 7d in einer Reihe angeordnet sein können, um die Spritzgussteile gleichzeitig von allen Armen 4a bis 4d der Entnahmevorrichtung 3 zu übernehmen, worauf jeweils zwei Umsetzplatten in die in Fig. 1 wiedergegebene Stellung über den Förderbahnen verfahren werden oder nur eine Umsetzeinheit mit den zwei Platten 7c und 7d über die zweite Förderbahn 6b verfahren wird, wenn die Übernahme über der ersten Förderbahn 6a erfolgt. Bei einer solchen Ausgestaltung wird die Entnahmevorrichtung 3 in eine einzige Transferstation T neben oder über der Förderbahn 6a bewegt, worauf nach Übergabe der Spritzgussteile die Entnahmevorrichtung 3 wieder in die Ausgangsstellung A zurückfahren kann, während eine oder beide Umsetzeinheiten quer zur Laufrichtung der Förderbahn in die Transferstationen T₁ und T₂ bewegt werden.

Anstelle der in Fig. 1 wiedergegebenen Gruppierung der Umsetzplatten in zwei Einheiten mit den Umsetzplatten 7a, 7b und 7c, 7d kann auch die über der Förderbahn 6a angeordnete Umsetzeinheit die weiter auseinanderliegenden Umsetzplatten 7a und 7c umfassen, während die zweite Umsetzeinheit die Umsetzplatten 7b und 7d über der zweiten Förderbahn 6b umfasst. Dies ist beispielsweise dann zweckmäßig, wenn die Spritzgussteile anders als in Fig. 1 schematisch dargestellt an den Seiten der Formhälften bei der Entnahme positioniert sind. Bei quer zur Förderbahn verfahrbaren Umsetzeinheiten kann eine entsprechende Gruppierung der Umsetzplatten vorgenommen werden. Beispielsweise können auch die erste Umsetzplatte 7a und die vierte Umsetzplatte 7d über der Förderbahn 6a eine Umsetzeinheit bilden, während die Umsetzeinheit über der Förderbahn.6b durch die Umsetzplatten 7b und 7c gebildet wird.

Nach einer weiteren Ausgestaltung der Erfindung kann bei dem Ausführungsbeispiel mit vier Trennebenen die Entnahmevorrichtung 3 selbst in zwei Einheiten unterteilt sein, wobei die erste Einheit die Spritzgußteile an eine erste Umsetzeinheit übergibt, während die zweite Einheit der Entnahmevorrichtung 3 in die zweite Transferposition bewegt wird, in der die Spritzgussteile an den betreffenden Armen an die zweite Umsetzeinheit übergeben werden. Beim Zurückfahren können die beiden Einheiten der Entnahmevorrichtung 3 beispielsweise in der Ausgangsstation A wieder in einer Reihe miteinander fluchtend angeordnet sein, so dass sie die Spritzgussteile aus dem geöffneten Etagenwerkzeug in allen vier Trennebenen gleichzeitig entnehmen können.

Die Anordnung der Spritzgussteile an den einzelnen Formhälften kann in verschiedener Weise ausgebildet sein. Die dargestellte Anordnung in zwei Reihen mit jeweils drei Spritzgussteilen ist lediglich beispielhaft.

In entsprechender Weise kann an der Umsetzeinrichtung 7 auch eine andere als die dargestellte Schwenkbewegung der einzelnen Umsetzplatten vorgesehen werden. Beispielsweise können die bei der Übernahme der Spritzgussteile senkrecht stehenden Umsetzplatten durch eine Betätigungseinrichtung unmittelbar über die Förderbahn verschwenkt werden, ohne dass die Umsetzplatten in einer Führung 8a, 9a geführt oder um einen Drehpunkt verschwenkt werden. Hierbei können die einzelnen Umsetzplatten einer Umsetzeinheit gegenläufig oder auch in der gleichen Richtung verschwenkt oder gedreht werden.

An der Spritzgießmaschine selbst kann ein einzelner oder auch ein Mehrfach-Spritzvorgang ausgeführt werden. Dies hat auf die beschriebene Ausgestaltung der Entnahme und Überführung der Spritzgussteile auf eine Förderbahn keinen Einfluss.

Fig. 6 zeigt in einer Draufsicht das Handlingsystem in einem Rahmen bzw. Gehäuse 10, das neben der Spritzgießmaschine 1 positioniert ist und von einem Förderband 6 mit insgesamt vier Spuren durchlaufen wird. Bei 11 ist eine Bahn vorgesehen, durch die schadhafte Spritzgussteile aussortiert werden können.

Die beschriebene Aufteilung der Umsetzeinrichtung in versetzt zueinander angeordnete oder in versetzte Positionen verfahrbare Umsetzeinheiten ist nicht nur bei einer horizontal verfahrbaren Entnahmevorrichtung, sondern auch bei einer karthesischen Entnahmevorrichtung mit vertikaler Achse anwendbar, bei der die Entnahmevorrichtung in drei Richtungen bewegbar ist.

## Patentansprüche

1. Verfahren zum Entnehmen von Spritzgussteilen aus einer Spritzgießmaschine (1), die mit einem Etagenwerkzeug (2) ausgerüstet ist, das mehr als zwei Trennebenen zwischen einer Anzahl von Formhälften (2a bis 2e) aufweist, und Überführen der Spritzgussteile auf eine Fördereinrichtung,
- wobei die Spritzgussteile (S) in allen Trennebenen gleichzeitig mittels einer Entnahmevorrichtung (3) entnommen werden, die Arme (4a bis 4d) entsprechend der Anzahl der Trennebenen aufweist,
- die Entnahmevorrichtung (3) in eine erste Transferposition (T₁) bewegt wird, in der die Spritzgussteile (S) von einer Gruppe von Armen (4a, 4b) durch eine Umsetzeinheit auf einer ersten Förderbahn (6a) abgelegt werden, und
- die Entnahmevorrichtung (3) in wenigstens eine zweite Transferposition (T₂) weiterbewegt wird, in der die Spritzgussteile von einer weiteren Gruppe von Armen (4c, 4d) durch eine weitere Umsetzeinheit auf einer zweiten Förderbahn (6b) abgelegt werden.

2. Verfahren zum Entnehmen von Spritzgussteilen aus einer Spritzgießmaschine (1), die mit einem Etagenwerkzeug (2) ausgerüstet ist, das mehr als zwei Trennebenen zwischen einer Anzahl von Formhälften (2a bis 2e) aufweist, und Überführen der Spritzgussteile auf eine Fördereinrichtung,
- wobei die Spritzgussteile (S) in allen Trennebenen gleichzeitig mittels einer Entnahmevorrichtung (3) entnommen werden, die Arme (4a bis 4d) entsprechend der Anzahl der Trennebenen aufweist,
- die Entnahmevorrichtung (3) in eine Transferposition (T) bewegt wird, in der die Spritzgussteile (S) von allen Armen (4a - 4 d) von der Umsetzeinrichtung (7) übernommen werden,
- worauf wenigstens eine von wenigstens zwei Einheiten der Umsetzeinrichtung in eine Transferposition (T₂) bewegt wird und
- die Spritzgussteile (S) von den einzelnen Einheiten der Umsetzeinrichtung (7) auf den zugeordneten Förderbahnen (6a, 6b) abgelegt werden.

3. Spritzgießmaschine mit einem Handlingsystem für Spritzgussteile, umfassend einen Arm (4) einer Entnahmevorrichtung (3), der in eine Trennebene zwischen geöffnete Formhälften ein- und ausfahrbar ist, und
eine Umsetzeinrichtung (7), die die entnommenen Spritzgussteile (S) von dem Arm der Entnahmeeinrichtung übernimmt und auf einer Förderbahn ablegt,
**dadurch gekennzeichnet,**
- **dass** die Spritzgießmaschine (1) ein Etagenwerkzeug (2) mit mehr als zwei Trennebenen zwischen einer Anzahl von Formhälften (2a bis 2e) aufweist,
- **dass** die Entnahmevorrichtung (3) eine Anzahl von Armen (4a bis 4d) entsprechend der Anzahl der Trennebenen des Etagenwerkzeugs aufweist,
- **dass** wengistens zwei versetzt zueinander angeordnete Umsetzeinheiten (7) vorgesehen sind, und
- **dass** wenigstens zwei den Umsetzeinheiten zugeordnete, nebeneinander liegende Förderbahnen (6a, 6b) vorgesehen sind.

4. Spritzgießmaschine mit einem Handlingsystem für Spritzgussteile, umfassend einen Arm (4) einer Entnahmevorrichtung (3), der in eine Trennebene zwischen geöffnete Formhälften ein- und ausfahrbar ist, und
eine Umsetzeinrichtung (7), die die entnommenen Spritzgussteile (S) von dem Arm der Entnahmeeinrichtung übernimmt und auf einer Förderbahn ablegt,
**dadurch gekennzeichnet,**
- **dass** die Spritzgießmaschine (1) ein Etagenwerkzeug (2) mit mehr als zwei Trennebenen zwischen einer Anzahl von Formhälften (2a bis 2e) aufweist,
- **dass** die Entnahmevorrichtung (3) eine Anzahl von Armen (4a bis 4d) entsprechend der Anzahl der Trennebenen des Etagenwerkzeugs aufweist, und
- **dass** die Umsetzeinrichtung (7) in wenigstens zwei Einheiten unterteilt ist, von denen wenigstens eine Einheit in eine Transferstation (T₂) über der zugeordneten (66) der nebeneinander Liegenden Förderbahnen (6b) verfahrbar ist.

5. Spritzgießmaschine mit einem Handlingsystem für Spritzgussteile nach den Ansprüchen 3 oder 4, wobei die Umsetzeinheiten verschwenkbare Umsetzplatten (7a bis 7d) aufweisen, die durch eine Betätgigungseinrichtung um etwa 90° in eine Umsetzstellung verschwenkbar sind.

6. Spritzgießmaschine mit einem Handlingsystem für Spritzgussteile nach Anspruch 5, wobei sich eine Führung (5a) der Entnahmevorrichtung (3) über dem Etagenwerkzeug (2) bzw. außerhalb von diesem und über der Umsetzeinrichtung (7) quer zur Längsachse der Spritzgießmaschine und der Bewegungsrichtung der Förderbahn (6) erstreckt und die Arme (4a bis 4d) der Entnahmevorrichtung (3) von der Führung (5a) nach unten ragen.

## Claims

1. Process of removing injection moulded parts from an injection moulding machine (1) equipped with a stack tool (2) having more than two separating planes between a number of mould halves (2a to 2e), and transferring the injection moulded parts to a transporting means,
- wherein the injection moulded parts (S) in all the separating planes are simultaneously removed by means of a removal device (3) having arms (4a - 4d) corresponding to the number of separating planes,
- the removal device (3) is moved into a first transfer position (T₁) in which the injection moulded parts (S) of a group of arms (4a, 4b) are laid onto a first transporting path (6a) by a transferring unit, and
- the removal device (3) is moved further into at least a second transfer position (T₂) in which the injection moulded parts of a further group of arms (4c, 4d) are laid onto a second transporting path (6b) by a further transferring unit.

2. Process of removing injection moulded parts from an injection moulding machine (1) equipped with a stack tool (2) comprising more than two separating planes between a number of mould halves (2a to 2e), and transferring the injection moulded parts to a transporting means,
- wherein the injection moulded parts (S) in all the separating planes are simultaneously removed by means of a removal device (3) having arms (4a - 4d) corresponding to the number of separating planes,
- the removal device (3) is moved into a transfer position (T) in which the injection moulded parts (S) of all arms (4a - 4d) are taken over by the transferring means (7),
- whereupon at least one of at least two units of the transferring means is moved into a transfer position (T₂) and
- the injection moulded parts (S) are laid on the allocated transporting paths (6a, 6b) by the individual units of the transferring means (7).

3. Injection moulding machine with a handling system for injection moulded parts, comprising
an arm (4) of a removal device (3) which is moveable in a separating plane in and out between opened mould halves, and
a transferring means (7) which takes over the removed injection moulded parts (S) from the arm of the removal device and lays them on a transporting path,
**characterized in that**
- the injection moulding machine (1) has a stack tool (2) having more than two separating planes between a number of mould halves (2a - 2e),
- the removal device (3) has a number of arms (4a - 4d) corresponding to the number of separating planes of the stack tool,
- at least two transferring units (7) are provided arranged offset from one another, and
- at least two transporting paths (6a, 6b) allocated to the transferring units are provided adjacent one another.

4. Injection moulding machine with a handling system for injection moulded parts, comprising
an arm (4) of a removal device (3) which is moveable in a separating plane in and out between opened mould halves, and
a transferring means (7) which takes over the removed injection moulded parts (S) from the arm of the removal device and lays them on a transporting path,
**characterized in that**
- the injection moulding machine (1) has a stack tool (2) having more than two separating planes between a number of mould halves (2a - 2e),
- the removal device (3) has a number of arms (4a - 4d) corresponding to the number of separating planes of the stack tool, and
- the transferring means (7) is divided into at least two units, of which at least one unit is moveable into a transfer station (T₂) via the allocated adjacent transporting paths (6b).

5. Injection moulding machine having a handling system for injection moulded parts according to claim 3 or 4, wherein the transferring units have pivotable transferring plates (7a - 7d) which are pivotable by approximately 90° into a transferring position by an actuating means.

6. Injection moulding machine having a handling system for injection moulded parts according to claim 5, wherein a guide (5a) of the removal device (3) extends over the stack tool (2) or outside of this and over the transferring means (7) transverse to the longitudinal axis of the injection moulding machine and the direction of movement of the transport path (6), and the arms (4a - 4d) of the removal device (3) project downward from the guide (5a).

## Revendications

1. Procédé pour retirer des pièces moulées par injection à partir d'une machine de coulée par injection (1), qui est équipée d'un outil étagé (2), qui comporte plus de deux plans de séparation entre une pluralité de moitiés de moule (2a à 2e), et pour le transfert des pièces moulées par injection à un dispositif de transport, selon lequel
- les pièces moulées par injection (S) sont prélevées simultanément dans tous les plans à l'aide d'un dispositif de prélèvement (3), qui comporte des bras (4a à 4d) correspondant au nombre de plans de séparation,
- le dispositif de prélèvement (3) est amené dans une première position de transfert (T₁), dans laquelle les pièces moulées par injection (S) sont déplacées par un groupe de bras (4a, 4b), à l'aide d'une unité de transbordement, sur une première voie de transport (6a), et
- le dispositif de prélèvement (3) est amené dans au moins une seconde position de transfert (T₂), dans laquelle les pièces moulées par injection sont déposées par un autre groupe de bras (4c,4d), à l'aide d'une autre unité de transbordement, sur une seconde voie de transport (6b).

2. Procédé pour retirer des pièces moulées par injection à partir d'une machine de coulée par injection (1), qui est équipée d'un outil étagé (2), qui comporte plus de deux plans de séparation entre une pluralité de moitiés de moule (2a à 2e), et pour le transfert des pièces moulées par injection à un dispositif de transport, selon lequel
- les pièces moulées par injection (S) sont prélevées simultanément dans tous les plans à l'aide d'un dispositif de prélèvement (3), qui comporte des bras (4a à 4d) correspondant au nombre des plan de séparation,
- le dispositif de prélèvement (3) est amené dans une position de transfert (T), dans laquelle les pièces moulées par injection (S) sont transférées par tous les bras (4a-4d), par le dispositif de transbordement (7),
- auquel cas au moins l'une d'au moins deux unités de dispositifs de transbordement est amenée dans une position de transfert (T₂), et
- les pièces moulées par injection (S) sont déposées par les unités individuelles du dispositif de transbordement (7) sur les voies de déplacement correspondantes (6a, 6b).

3. Machine de moulage par injection comportant un système de manipulation pour des pièces moulées par injection, comprenant un bras (4) d'un dispositif de prélèvement (3), qui peut être rétracté et déployé dans un plan de séparation entre des moitiés de moule ouvertes, et un dispositif de transbordement (7), qui reçoit les pièces moulées par injection prélevées (S), du bras du dispositif de prélèvement et les dispose sur une voie de transport,
**caractérisée en ce**
- **que** la machine de moulage par injection (1) comporte un outil étagé (2) comportant plus de deux plans de séparation entre une pluralité de moitiés de moule (2a à 2e),
- **que** le dispositif de prélèvement (3) comporte un nombre de bras (4a à 4d) correspondant au nombre des plans de séparation de l'outil étagé,
- **qu'**au moins deux unités de transbordement (7) décalées l'une par rapport à l'autre sont prévues, et
- **qu'**au moins deux voies de transport (6a,6b) associées aux unités de transbordement et disposées côte-à-côte, sont prévues.

4. Machine de moulage par injection comportant un système de manipulation pour des pièces moulées par injection, comprenant un bras (4) d'un dispositif de prélèvement (3), qui peut être rétracté et déployé dans un plan de séparation entre des moitiés de moule ouvertes, et un dispositif de transbordement (7), qui reçoit les pièces moulées par injection prélevées (S), du bras du dispositif de prélèvement et les dispose sur une voie de transport, **caractérisée en ce**
- **que** la machine de moulage par injection (1) comporte un outil étagé (2) comportant plus de deux plans de séparation entre une plutalité de moitiés de moule (2a à 2e),
- **que** le dispositif de prélèvement (3) comporte un nombre de bras (4a à 4d) correspondant au nombre des plans de séparation de l'outil étagé, et
- **que** le dispositif de transbordement (7) est divisé en au moins deux unités, parmi lesquelles au moins une unité peut être amenée dans un poste de transfert (T₂) par l'intermédiaire de la voie de transport correspondante (6b) parmi les voies de transport (6b) disposées côte-à-côte.

5. Machine de moulage par injection comportant un système de manipulation pour des pièces moulées par injection selon les revendications 3 ou 4, dans laquelle les unités de transbordement comportent des plaques pivotantes de transbordement (7a à 7d), qui peuvent pivoter sur environ 90° pour venir dans une position de transbordement, sous l'action d'un dispositif d'actionnement.

6. Machine de moulage par injection comportant un système de manipulation pour des pièces moulées par injection selon la revendication 5, dans laquelle un guide (5a) du dispositif de prélèvement (3) s'étend au-dessus de l'outil étagé (2) ou à l'extérieur de ce dernier et au-dessus du dispositif de transbordement (7) transversalement par rapport à l'axe longitudinal de la machine de moulage par injection et par rapport à la direction de déplacement de la voie de transport (6), et les bras (4a à 4d) du dispositif de prélèvement (3) font saillie vers le bas à partir du dispositif de guidage (5a).
